# EUROPEAN PATENT APPLICATION

(11) **EP 3 607 832 A1**
(43) Date of publication of application: **12.02.2020**
(21) Application number: 18780587.4
(22) Date of filing: 02.04.2018
(51) Int. Cl.: A23L 27/00, A23L 27/30

(54) **TASTE IMPROVER**

(30) Priority: 04.04.2017 JP 2017074568
(71) Applicant: J-Oil Mills, Inc., Tokyo 104-0044 (JP)
(72) Inventor: TSUJI, Misaki, Tokyo 104-0044 (JP); TOKUCHI, Takahiro, Tokyo 104-0044 (JP); INOUE, Masahiro, Tokyo 104-0044 (JP)
(74) Representative: Mewburn Ellis LLP
(86) International application number: PCT/JP2018/014063
(87) International publication number: WO 2018/186328

(57) **Abstract**

Provided is a taste improver having an exceptional effect for improving the taste of a high-intensity sweetener, or a method for improving the taste.

The present invention provides a taste improver for a high-intensity sweetener, the taste improver having, as an active ingredient, an oxidized oil and fat having a peroxide value of 15 to 180 and including 10% by mass to 100% by mass of milk fat. The present invention also provides a food or drink containing a high-intensity sweetener, the food or drink containing the taste improver. The present invention also provides a method for imparting sweetness and a sweetness-imparting composition, in each of which the oxidized oil and fat is used in combination with a high-intensity sweetener.

## Description

### TECHNICAL FIELD

The present invention relates to a taste improver applied to a food or drink, etc., and more specifically relates to a taste improver that improves the taste of a high-intensity sweetener.

### BACKGROUND ART

It is known that sucralose, aspartame, stevia, acesulfame potassium (acesulfame K), advantame, neotame, and other such high-intensity sweeteners can, in small added amounts, impart the same level of sweetness as sucrose due to having several tens to several thousands of times the sweetness of sucrose. Therefore, due to a rise in health-consciousness in recent years, there has been an increase in foods and drinks that can be reduced in calories by using high-intensity sweeteners in lieu of sweeteners such as sugar. However, improving high-intensity sweeteners in regard to the taste imparted, *inter alia,* due to the characteristic bitterness, acridity, off-flavor, and lingering aftertaste due to sweetness, is a major problem. Specifically, although high-intensity sweeteners are useful in terms of being capable of imparting sweetness when used in small amounts, they also have unusual flavors not present in typical sweeteners such as sugar. This serves as a primary factor undermining the value of such foods and drinks.

In relation to such problems, patent document 1 (Japanese Laid-open Patent Application No. 2000-270804) indicates that the bitterness of a high-intensity sweetener is reduced using a specific amino acid such as L-asparagine. Patent document 2 (Japanese Laid-open Patent Application No. 2003-210147) indicates that an aftertaste in a sucralose-containing drink is improved using a specific organic acid such as malic acid. Furthermore, patent document 3 (Japanese Laid-open Patent Application No. 2015-142521) indicates that an unpleasant off-flavor, etc., of a high-intensity sweetener can be improved using glucosamine or N-acetyl glucosamine.

Patent document 4 (Japanese Patent No. 5976968) discloses enhancing milk flavor using oil and fat containing milk fat that has been subjected to a specific oxidation treatment. However, patent document 4 does not disclose an effect for improving the taste of a high-intensity sweetener.

### [Prior Art Related Documents]

### [Patent Documents]

[Patent Document 1] Japanese Laid-open Patent Application No. 2000-270804
[Patent Document 2] Japanese Laid-open Patent Application No. 2003-210147
[Patent Document 3] Japanese Laid-open Patent Application No. 2015-142521
[Patent Document 4] Japanese Patent No. 5976968

### DISCLOSURE OF THE INVENTION

### [Problems the Invention is Intended to Solve]

An object of the present invention is to provide a taste improver having an exceptional effect for improving the taste of a high-intensity sweetener, or a method for improving the taste.

### [Means to Solve the Problems]

As a result of thoroughgoing studies, the inventors perfected the present invention upon discovering that an oxidized oil and fat containing a predetermined amount of milk fat has an effect for improving the taste of a high-intensity sweetener.

Specifically, the present invention provides a taste improver for a high-intensity sweetener, the taste improver having, as an active ingredient, an oxidized oil and fat having a peroxide value of 15 or more to 180 or less and including 10% by mass or more to 100% by mass or less of milk fat.

In the taste improver according to the present invention, the taste improver preferably includes 0.001% by mass or more to 100% by mass or less of the oxidized oil and fat.

In the taste improver, the improvement in taste is preferably an improvement of unusual flavors in a high-intensity sweetener.

The present invention also provides a method for manufacturing a taste improver for a high-intensity sweetener, the method including
a step for heating, while supplying oxygen to, a raw material oil and fat including 10% by mass or more to 100% by mass ore less of milk fat, and obtaining an oxidized oil and fat having a peroxide value of 15 or more to 180 or less.

In the method for manufacturing a taste improver according to the present invention, the raw material oil and fat preferably includes 20% by mass or more to 100% by mass ore less of milk fat.

In the manufacturing method, the heating is preferably performed for 1 hour or more to 72 hours or less at a temperature of 65°C or higher to 150°C or lower.

In the manufacturing method, the supply of oxygen is preferably 0.001 L/min or more to 2 L/min or less per kilogram of the raw material oil and fat.

In the manufacturing method, the milk fat is preferably anhydrous milk fat.

In the manufacturing method, the oil and fat content of the raw material oil and fat is preferably 90% by mass or more to 100% by mass or less.

Preferably, the manufacturing method furthermore includes a step for adding the oxidized oil and fat to an edible oil and fat.

In such a case, 0.001% by mass or more to 50% by mass or less of the oxidized oil and fat is preferably added to the edible oil and fat.

The present invention also provides a food or drink including a high-intensity sweetener, the food or drink including a taste improver for the high-intensity sweetener, and the taste improver having, as an active ingredient, an oxidized oil and fat having a peroxide value of 15 or more to 180 or less and including 10% by mass or more to 100% by mass or less of milk fat.

In the food or drink according to the present invention, the taste improver is preferably included so that the milk fat content of the oxidized oil and fat is 0.01 ppm or more to 10000 ppm or less.

In the food or drink, the taste improver is preferably included so that the milk fat content of the oxidized oil and fat is 0.0001 parts by mass or more to 10000 parts by mass or less in relation to 100 parts by mass of the high-intensity sweetener.

In the food or drink, preferably 0.00001% by mass or more to 5% by mass or less of the high-intensity sweetener is included.

The present invention also provides a method for imparting sweetness, the method being characterized in that an oxidized oil and fat having a peroxide value of 15 or more to 180 or less and including 10% by mass or more to 100% by mass or less of milk fat, and a high-intensity sweetener, are added to a food or drink.

The present invention also provides a sweetness-imparting composition characterized by including an oxidized oil and fat having a peroxide value of 15 or more to 180 or less and including 10% by mass or more to 100% by mass or less of milk fat, and a high-intensity sweetener.

### [Advantageous Effects of the Invention]

Through the present invention, it is possible to provide a taste improver having an exceptional effect for improving the taste of a high-intensity sweetener, and a method for improving the taste, by using an oxidized oil and fat including a predetermined amount of milk fat.

### BEST MODE FOR CARRYING OUT THE INVENTION

In the present invention, an oxidized oil and fat having a peroxide value of 15 or more to 180 or less and including 10% by mass or more to 100% by mass or less of milk fat is used as an active ingredient for improving the taste of a high-intensity sweetener. Specifically, provided is a taste improver for a high-intensity sweetener, the taste improver having the oxidized oil and fat as an active ingredient.

In the taste improver according to the present invention, the oxidized oil and fat content should be an amount that is effective for improving the taste of the high-intensity sweetener, there being no particular limitation as to the amount. For example, the oxidized oil and fat content is set so as to be preferably 0.001% by mass or more to 100% by mass or less, more preferably 0.005% by mass or more to 100% by mass or less, even more preferably 0.005% by mass or more to 50% by mass or less, and yet even more preferably 0.005% by mass or more to 10% by mass or less.

Milk fat is defined as a fat which is obtained from raw milk, milk, or certified milk and which has an oil and fat content of 95% by mass or more to 100% by mass or less. Examples thereof include anhydrous milk fat, clarified butter, etc. "Anhydrous milk fat" is a product obtained by removing almost all components other than butterfat from milk, etc., and is also sometimes referred to as anhydrous milk fat (AMF), butter oil, etc. Clarified butter is a product obtained by fractionation of the fat content of butter. The milk fat used in the present invention is preferably anhydrous milk fat or clarified butter, and anhydrous milk fat is more preferred. The oil and fat content of the milk fat is preferably 98% by mass or more to 100% by mass or less, and more preferably 99% by mass or more to 100% by mass or less.

The milk fat content of the oxidized oil and fat used in the present invention is 10% by mass or more to 100% by mass or less, preferably 20% by mass or more to 100% by mass or less, more preferably 50% by mass or more to 100% by mass or less, even more preferably 60% by mass or more to 100% by mass or less, yet even more preferably 65% by mass or more to 100% by mass or less, particularly preferably 95% by mass or more to 100% by mass or less, and most preferably 100% by mass (i.e., milk fat alone). The oil and fat content of the oxidized oil and fat is preferably 90% by mass or more to 100% by mass or less, more preferably 95% by mass or more to 100% by mass or less, even more preferably 98% by mass or more to 100% by mass or less, and yet even more preferably 99% by mass or more to 100% by mass or less.

The oxidized oil and fat may also include an edible oil and fat other than milk fat. There is no particular limitation as to the edible oil and fat other than milk fat; any one or more types thereof selected from medium-chain fatty acid triglycerides, soybean oil, rapeseed oil, corn oil, palm oil, and fractionated palm oil are preferred, and any one or more types thereof selected from soybean oil and rapeseed oil are more preferred. The oxidized oil and fat may include an auxiliary, etc., that can normally be added to an oil and fat, insofar as the addition thereof does not compromise the effect of the present invention. The water content of the oxidized oil and fat is preferably less than 1% by mass.

The peroxide value (also referred to as "POV" below) of the oxidized oil and fat in the present invention is 15 or more to 180 or less, preferably 30 or more to 150 or less, more preferably 35 or more to 140 or less, even more preferably 40 or more to 140 or less, and particularly preferably 40 or more to 120 or less. By using a predetermined POV, it is possible to expect an even greater effect in terms of improving the taste of the high-intensity sweetener.

The oxidized oil and fat can be given a POV in a predetermined range by oxidation thereof, and there is no particular limitation as to the method of oxidation. The oxidized oil and fat are preferably heated during oxidation thereof, and the heating temperature is preferably 65°C or higher to 150°C or lower, more preferably 70°C or higher to 140°C or lower, and even more preferably 75°C or higher to 140°C or lower. There is no particular limitation as to the oxidation time, which is preferably 1 hour or more to 72 hours or less, more preferably 3 hours or more to 72 hours or less, and even more preferably 5 hours or more to 72 hours or less.

During oxidation, oxygen is preferably supplied to a raw material oil and fat to be oxidized. The supply source of oxygen may be oxygen alone or air or another supply source that includes oxygen, but air is preferred. Oxygen is preferably supplied at a rate of 0.001 L/min or more to 2 L/min or less, more preferably 0.005 L/min or more to 2 L/min or less, and even more preferably 0.02 L/min or more to 2 L/min or less, per kilogram of the raw material oil and fat. For example, when air is used, the supply rate is preferably 0.005 L/min or more to 10 L/min or less, more preferably 0.025 L/min or more to 10 L/min or less, even more preferably 0.1 L/min or more to 10 L/min or less, and yet even more preferably 0.3 L/min or more to 5 L/min or less, per kilogram of raw material oil and fat. The raw material oil and fat is also preferably stirred when oxidation is performed.

The milk fat content of the raw material oil and fat is 10% by mass or more to 100% by mass or less, preferably 20% by mass or more to 100% by mass or less, more preferably 50% by mass or more to 100% by mass or less, even more preferably 60% by mass or more to 100% by mass or less, yet even more preferably 65% by mass or more to 100% by mass or less, particularly preferably 95% by mass or more to 100% by mass or less, and most preferably 100% by mass (i.e., milk fat alone). The oil and fat content of the raw material oil and fat is preferably 90% by mass or more to 100% by mass or less, more preferably 95% by mass or more to 100% by mass or less, even more preferably 98% by mass or more to 100% by mass or less, and yet even more preferably 99% by mass or more to 100% by mass or less.

The raw material oil and fat may also include an edible oil and fat other than milk fat. There is no particular limitation as to the edible oil and fat other than milk fat; any one or more types thereof selected from medium-chain fatty acid triglycerides, soybean oil, rapeseed oil, corn oil, palm oil, and fractionated palm oil are preferred, and any one or more types thereof selected from soybean oil and rapeseed oil are more preferred. The water content of the raw material oil and fat is preferably less than 1% by mass.

According to the present invention, including the oxidized oil and fat described above in a food or drink, etc., that includes a high-intensity sweetener makes it possible to improve the taste of the high-intensity sweetener. More specifically, the present invention has an exceptional effect for improving an unusual flavor, etc., arising from the high-intensity sweetener. The term "unusual flavor" refers to a characteristic taste of the high-intensity sweetener, such as bitterness, off-flavor, acridity, continuing sweetness (sweetness persisting as an aftertaste), excessive sweetness, jarringly unpleasant sweetness, or unnatural sweetness, that is tasted when a food or drink, etc., is consumed. The term "improve" includes: an effect whereby the unusual flavor is reduced, suppressed, and even eliminated; or an effect for approximating the sweetness presented by typical sweeteners such as sugar. In particular, the present invention is exceptional in terms of an effect for, upon consumption, suppressing lingering aftertaste due to sweetness, bitterness, and off-flavor, and, and an effect for approximating the sweetness of sugar. Such an effect for improving the presence of unusual flavors of the high-intensity sweetener and improving the taste of the high-intensity sweetener can be objectively determined through, e.g., sensory evaluation by expert panelists who meet fair criteria.

There is no particular limitation as to the high-intensity sweetener to which the present invention is applied; the high-intensity sweetener is a natural or synthetic compound having 10 times or more the sweetness of sucrose, or more preferably 100 times or more the sweetness of sucrose. Examples of natural sweeteners include stevia extract, luo han guo extract, glycyrrhizin, glycyrrhic acid salts, and thaumatin; examples of artificial sweeteners include sucralose, acesulfame potassium, amino-acid-based sweeteners (aspartame, advantame, alitame, neotame, etc.), saccharin, saccharin sodium, and dulcin. Artificial sweeteners are preferred; one or more selected from among sucralose, acesulfame potassium, and amino-acid-based sweeteners are more preferred, one or more selected from among sucralose and amino-acid-based sweeteners are even more preferred, and one or more selected from among sucralose and aspartame are yet even more preferred.

There is no particular limitation as to the food or drink to which the present invention is applied, insofar as the food or drink includes the high-intensity sweetener. The food or drink may also contain sugar or another such sweetener other than the high-intensity sweetener. Substances that are orally ingested by humans and/or animals aside from foods and drinks, such as orally administered medicines, bait, and fodder, are also included. More specifically, examples include: goods processed from fruits, vegetables, marine products, etc.; paste products; pre-cooked foods; prepared foods; snack foods; processed foods; nutritive foods; tea drinks, coffee drinks, fruit juice drinks, carbonated drinks, soft drinks, functional drinks, alcoholic drinks, sports drinks, and other such beverages; ice cream, sherbet, and other such frozen desserts; gels, candy, gummi candy, gum, pudding, *yokan,* and other such desserts; cookies, cake, chocolate, chewing gum, *manju,* and other such confectionery; sweet pastries, baked bread, and other such breads; *ramune,* tablets, and other such tablet candies; instant coffee, instant soup, and other such instant foods; gum syrup, stick sugar, and other such sweet preparations; seasonings; dressings; orally administered medicines; pet foods; and fodder. There is no particular limitation as to the amount of high-intensity sweetener included in the food or drink; for example, the contained amount is 0.00001% by mass or more to 5% by mass or less, and preferably is 0.00005% by mass or more to 4% by mass or less.

There is no particular limitation as to the method of applying the present invention; the method can be any method in which the oxidized oil and fat described above is combined with the high-intensity sweetener. More specifically, the oxidized oil and fat can be included in a food or drink, etc., that includes the high-intensity sweetener. There is also no particular limitation as to the timing of addition; for example, the oxidized oil and fat may be added at any time after the food or drink is manufactured and before consumption, or may be added at any step of the manufacturing of the food or drink. For example, in a step for manufacturing the food or drink, etc., that includes the high-intensity sweetener, the oxidized oil and fat may be added to a raw material or to an intermediate in the manufacturing step. The oxidized oil and fat may be added before, after, or simultaneously with the high-intensity sweetener. Alternatively, the oxidized oil and fat may be added in the form of a composition that includes both the oxidized oil and fat and the high-intensity sweetener in a compositive manner.

The oxidized oil and fat content of the food or drink may be adjusted in accordance with the effect thereof. For example, the content is set so that the amount of milk fat included in the oxidized oil and fat is preferably 0.01 ppm or more to 10000 ppm or less, more preferably 0.05 ppm or more to 10000 ppm or less, even more preferably 0.1 ppm or more to 5000 ppm or less, yet even more preferably 1 ppm or more to 3000 ppm or less, and particularly preferably 1 ppm or more to 1000 ppm or less.

The oxidized oil and fat content of the food or drink is set so that the amount of milk fat included in the oxidized oil and fat is, e.g., 0.0001 parts by mass or more to 10000 parts by mass or less, preferably 0.001 parts by mass or more to 7000 parts by mass or less, and more preferably 0.005 parts by mass or more to 7000 parts by mass or less relative to 100 parts by mass of the high-intensity sweetener included in the food or drink.

As described above, the method of applying the present invention may be any method in which the oxidized oil and fat is included in the food or drink, etc. In this case, the oxidized oil and fat may be added in the form of a food-and-drink composition, specifically in the form of, e.g., a food additive preparation, a sweetness preparation, etc., to the food or drink or to a raw material thereof.

When the present invention is applied in the form of a food-and-drink composition, there is no particular limitation as to the oxidized oil and fat content of the food-and-drink composition, insofar as the effect for improving the taste of the high-intensity sweetener is exhibited. The oxidized oil and fat content is typically set so as to be preferably 0.001% by mass or more to 100% by mass or less, more preferably 0.005% by mass or more to 100% by mass or less, even more preferably 0.005% by mass or more to 50% by mass or less, and yet even more preferably 0.005% by mass or more to 10% by mass or less.

When the present invention is applied in the form of a food-and-drink composition, an edible oil and fat for diluting the oxidized oil and fat may be used in the food-and-drink composition. In this case, the oxidized oil and fat content is set so as to be preferably 0.001% by mass or more to 50% by mass or less, more preferably 0.01% by mass or more to 50% by mass or less, even more preferably 0.01% by mass or more to 20% by mass or less, and yet even more preferably 0.01% by mass or more to 10% by mass or less relative to the edible oil and fat. There is no particular limitation as to the edible oil and fat; examples thereof include: palm kernel oil, palm oil, coconut oil, corn oil, cottonseed oil, soybean oil, rapeseed oil, rice bran oil, sunflower oil, safflower oil, cacao butter, and other such vegetable oils and fats; lard and other animal oils and fats; medium-chain fatty acid triglycerides; etc. Fractionated oils (a medium-melting part of palm oil, a fractionated soft oil of palm oil, a fractionated hard oil of palm oil, etc.), transesterified oils, hydrogenated oils, and other processed oils and fats of the above oils and fats can also be used. One or more of the above edible oils and fats can be used. The food-and-drink composition can be in any form that is applied to foods and drinks; for example, the edible oils and fats can be in liquid form, powdered form, etc. An auxiliary, etc., that can normally be added to an oil and fat may also be used, insofar as the addition thereof does not compromise the effect of the present invention. Furthermore, corn syrup, etc., for obtaining a powdered or other form may be used.

According to another aspect of the present invention, it is possible to provide a method for imparting sweetness, the method involving adding the oxidized oil and fat and the high-intensity sweetener to a food or drink. Specifically, in the method for imparting sweetness, sweetness is imparted to the food or drink by the high-intensity sweetener, and the taste of the high-intensity sweetener is improved by the oxidized oil and fat. The forms in which the oxidized oil and fat and the high-intensity sweetener are applied to the food or drink are as described above.

According to another aspect of the present invention, it is possible to provide a sweetness-imparting composition including a high-intensity sweetener and an oxidized oil and fat having a peroxide value of 15 or more to 180 or less and including 10% by mass or more to 100% by mass or less of milk fat. Specifically, by including the sweetness-imparting composition in a food or drink, etc., sweetness is imparted to the food or drink, etc., by the high-intensity sweetener and the taste of the high-intensity sweetener is improved by the oxidized oil and fat.

When the present invention is applied in the form of a sweetness-imparting composition, there is no particular limitation as to the oxidized oil and fat content of the sweetness-imparting composition, insofar as the effect for improving the taste of a high-intensity sweetener is exhibited. The oxidized oil and fat content is typically set so as to be preferably 0.001% by mass or more to 80% by mass or less, more preferably 0.005% by mass or more to 80% by mass or less, even more preferably 0.005% by mass or more to 70% by mass or less, and yet even more preferably 0.005% by mass or more to 50% by mass or less. The high-intensity sweetener content is, for example, preferably 5% by mass or more to 99.999% by mass or less, more preferably 5% by mass or more to 99.995% by mass or less, and even more preferably 15% by mass or more to 99.995% by mass or less. The milk fat included in the oxidized oil and fat is, for example, 0.0001 parts by mass or more to 10000 parts by mass or less, preferably 0.005 parts by mass or more to 7000 parts by mass or less, more preferably 0.01 parts by mass or more to 7000 parts by mass or less, even more preferably 0.1 parts by mass or more to 7000 parts by mass or less, and yet even more preferably 1 part by mass or more to 7000 parts by mass or less relative to 100 parts by mass of the high-intensity sweetener.

When the present invention is applied in the form of a sweetness-imparting composition, an edible oil and fat for diluting the oxidized oil and fat may be used in the sweetness-imparting composition. In this case, the oxidized oil and fat content is set so as to be preferably 0.001% by mass or more to 50% by mass or less, more preferably 0.01% by mass or more to 50% by mass or less, even more preferably 0.01% by mass or more to 20% by mass or less, and yet even more preferably 0.01% by mass or more to 10% by mass or less relative to the edible oil and fat. There is no particular limitation as to the edible oil and fat; examples thereof include: palm kernel oil, palm oil, coconut oil, corn oil, cottonseed oil, soybean oil, rapeseed oil, rice bran oil, sunflower oil, safflower oil, cacao butter, and other such vegetable oils and fats; lard and other animal oils and fats; medium-chain fatty acid triglycerides; etc. Fractionated oils (a medium-melting part of palm oil, a fractionated soft oil of palm oil, a fractionated hard oil of palm oil, etc.), transesterified oils, hydrogenated oils, and other processed oils and fats of the above oils and fats can also be used. One or more of the above edible oils and fats can be used. The sweetness-imparting composition can be in any form that is applied to foods and drinks; for example, the edible oils and fats can be in liquid form, powdered form, etc. An auxiliary, etc., that can normally be added to an oil and fat may also be used, insofar as the addition thereof does not compromise the effect of the present invention. Furthermore, corn syrup, etc., for obtaining a powdered or other form may be used.

The sweetness-imparting composition may also include starch, dextrin, or another such filler.

Other embodiments, in which the sweetness-imparting composition is applied to the food or drink, etc., are the same as for the taste improver provided by the present invention and are as described above.

### [Examples]

The present invention is described in further detail below by way of examples, but the gist of the present invention is not limited by these examples.

The items below were used to implement.
(Oils and fats) (water content of each item being less than 1% by mass)
Anhydrous milk fat (product name: Butter oil CML, manufactured by MARUWAYUSHI CO.,LTD., oil and fat content: 99.8% by mass)
Soybean oil (manufactured by J-OIL MILLS, Inc.)
Rapeseed oil (manufactured by J-OIL MILLS, Inc.)
High oleic acid-low linoleic acid rapeseed oil (HOLL rapeseed oil) (manufactured by J-OIL MILLS, Inc.)

### (High-intensity sweeteners)

Pal sweet calorie zero (product name: Pal sweet calorie zero, manufactured by Ajinomoto Co., Inc.; includes aspartame/L-phenylalanine compound and acesulfame K as high-intensity sweeteners)
Aspartame (product name: Aspartame, manufactured by Wako Pure Chemical Industries, Ltd.)
Acesulfame K (product name: Acesulfame K, imported by Hokudai Trading Co., Ltd.)
Sucralose (product name: Sucralose standard, manufactured by Wako Pure Chemical Industries, Ltd.)

### (Preparation example 1)

Anhydrous milk fat (200 g) was introduced into a stainless steel beaker, and, while being incubated at 120°C, was stirred and air (200 mL/min) was supplied thereto to obtain an oxidized oil and fat (preparation example 1) having a peroxide value (POV) of 46. The POV of the oxidized oil and fat was measured in accordance with "Standard Methods for the Analysis of Fats, Oils, and Related Materials 2.5.2: Peroxide Value."

### (Preparation example 2)

Preparation example 1 (0.1 parts by mass) was mixed with 99.9 parts by mass of rapeseed oil to obtain preparation example 2.

### (Preparation example 3)

Preparation example 1 (1 part by mass) was mixed with 99 parts by mass of rapeseed oil to obtain preparation example 3.

### (Preparation example 4)

Preparation example 1 (10 parts by mass) was mixed with 90 parts by mass of rapeseed oil to obtain preparation example 4.

### (Evaluation of added amounts)

Milk (product name: Meiji delicious milk, manufactured by Meiji Co., Ltd.) (195 g), 6.7 g of high-intensity sweetener (product name: Pal sweet calorie zero), and 0.22 g of either rapeseed oil or one of preparations 2 to 4 were mixed and heated in a container. Heating was stopped once the high-intensity sweetener was sufficiently dissolved, and the mixture was stirred for five minutes at 5000 rpm using a disperser to obtain a mixed liquid.

Gelatin (3 g) and 15 g of water were mixed and the gelatin was caused to absorb the water to obtain water-absorbed gelatin. The water-absorbed gelatin was heated for 20 seconds in a microwave at 500 W and melted, the melted gelatin was added to the mixed liquid, and the resultant mixture was sufficiently stirred using a spatula to obtain a gelatin-containing mixed liquid. After being dispensed into a cup, the gelatin-containing mixed liquid was cooled at 4°C once residual heat was removed, and a milk gel was obtained.

The resultant milk gel was eaten by three panelists, and the suppression of a lingering aftertaste due to sweetness and the quality of the sweetness were evaluated according to the following evaluation criteria on the basis of consultation. The results are shown in Table 1.

A lingering aftertaste due to sweetness, which is characteristic of high-intensity sweeteners, refers to a state in which sweetness is continuing without elimination upon consumption of a food or drink.

### <Suppression of lingering aftertaste due to sweetness>

⊚: Extremely weak lingering aftertaste due to sweetness relative to control
○: Weak lingering aftertaste due to sweetness relative to control
Δ: Somewhat weak lingering aftertaste due to sweetness relative to control
×: Equal or stronger lingering aftertaste due to sweetness relative to control

### <Quality of sweetness>

⊚: Extremely close to sweetness of sugar
o: Close to sweetness of sugar
Δ: Somewhat different from sweetness of sugar
×: Different from sweetness of sugar

**[Table 1]**

| | Control | Example 1-1 | Example 1-2 | Example 1-3 |
|---|---|---|---|---|
| Added component | Rapeseed oil | Preparation example 2 | Preparation example 3 | Preparation example 4 |
| POV of oxidized oil and fat in added component (meq/kg) | - | 46 | 46 | 46 |
| Oxidized oil and fat content of added component (percent by mass) | 0 | 0.1 | 1 | 10 |
| Oxidized oil and fat content during consumption (ppm) | 0 | 1 | 10 | 100 |
| Suppression of lingering aftertaste due to sweetness | × | Δ | ○ | ⊚ |
| Quality of sweetness | × | Δ | ⊚ | ⊚ |

In the milk gels obtained by blending preparation examples 2 to 4, the lingering aftertaste due to sweetness that is characteristic of high-intensity sweeteners weakened. In particular, in example 1-3, no lingering aftertaste due to sweetness was evident at all.

With regard to the quality of sweetness, blending the ingredients so that the oxidized oil and fat content during consumption was 10 ppm or higher made it possible to obtain a milk gel that was extremely close to the sweetness of sugar.

### (Evaluation using various POVs)

Oxidized oils and fats having different POVs were prepared as described below.

### (Preparation examples 5 to 10)

Anhydrous milk fat (200 g) was introduced into a stainless steel beaker, and, while being incubated at 100°C, was stirred and air (200 mL/min) was supplied thereto. Samples were taken at appropriate times to obtain oxidized oils and fats of preparation examples 6 to 10. Anhydrous milk fat that was not oxidized was used as preparation example 5.

The peroxide value (POV) of the resulting oxidized oil and fat was measured in compliance with "Standard Methods for the Analysis of Fats, Oils, and Related Materials, 2.5.2 Peroxide Value." The results are shown in Table 2.

**[Table 2]**

| | Prep. example 5 | Prep. example 6 | Prep. example 7 | Prep. example 8 | Prep. example 9 | Prep. example 10 |
|---|---|---|---|---|---|---|
| POV (meq/kg) | 0 | 15 | 34 | 46 | 83 | 120 |

### (Preparation examples 11 to 16)

Any of the oils and fats in preparation examples 5 to 10 (10 parts by mass) was mixed with 90 parts by mass of rapeseed oil to obtain preparation examples 11 to 16.

An evaluation was performed using the same operations as those in example 1-3, except that rapeseed oil (control) or any of preparation examples 11 to 16 was added in lieu of preparation example 4. The results are shown in Table 3.

**[Table 3]**

| | Control | Comparative example 3-1 | Example 3-1 | Example 3-2 | Example 3-3 | Example 3-4 | Example 3-5 |
|---|---|---|---|---|---|---|---|
| Added component | Rapeseed oil | Preparation example 11 | Preparation example 12 | Preparation example 13 | Preparation example 14 | Preparation example 15 | Preparation example 16 |
| POV of oxidized oil and fat in added component (meq/kg) | - | 0 | 15 | 34 | 46 | 83 | 120 |
| Oxidized oil and fat content of added component (percent by mass) | 0 | 10 | 10 | 10 | 10 | 10 | 10 |
| Oxidized oil and fat content during consumption (ppm) | 0 | 100 | 100 | 100 | 100 | 100 | 100 |
| Suppression of lingering aftertaste due to sweetness | × | × | Δ | ○ | ⊚ | ⊚ | ⊚ |
| Quality of sweetness | × | × | Δ | ○ | ⊚ | ⊚ | ⊚ |

As shown in examples 3-1 to 3-5, an effect for suppressing a lingering aftertaste due to sweetness was confirmed when the POV of the oxidized oil and fat was 15 or higher. The effect was particularly strong at a POV of 34 or more to 120 or less, and especially notable at a POV of 46 or more to 120 or less. The same effect was also confirmed with regard to the quality of sweetness.

However, as shown in comparative example 3-1, using anhydrous milk fat that not oxidized, no effect for suppressing a lingering aftertaste due to sweetness or effect for improving the quality of sweetness could be confirmed.

### (Evaluation of milk fat content)

### (Preparation example 17: Oxidized oil and fat including milk fat and edible oil and fat other than milk fat)

Soybean oil (60 g) was mixed with 140 g of anhydrous milk fat, and an oil and fat including 70% by mass of milk fat was obtained. The prepared oil and fat (200 g) was introduced into a stainless steel beaker, and, while being incubated at 120°C, was stirred and air (200 mL/min) was supplied thereto. Reaction was performed for 13 hours, and an oxidized oil and fat having a POV of 44.6 was obtained. Rapeseed oil (90 parts by mass) was mixed with 10 parts by mass of the resultant oxidized oil and fat to obtain preparation example 17.

### (Preparation example 18: Oxidized oil and fat including milk fat and edible oil and fat other than milk fat)

HOLL rapeseed oil (50 parts by mass) was mixed with 50 parts by mass of anhydrous milk fat, and oil and fat containing 50% by mass of milk fat was prepared. The prepared oil and fat (200 g) was introduced into a stainless steel beaker, and, while being incubated at 100°C, was stirred and air (200 mL/min) was supplied thereto. Reaction was performed for 36 hours, and an oxidized oil and fat having a POV of 100 was obtained. Rapeseed oil (90 parts by mass) was mixed with 10 parts by mass of the resultant oxidized oil and fat to obtain preparation example 18.

### (Preparation example 19: Oxidized oil and fat including milk fat and edible oil and fat other than milk fat)

HOLL rapeseed oil (80 parts by mass) was mixed with 20 parts by mass of anhydrous milk fat, and oil and fat containing 20% by mass of milk fat was prepared. The prepared oil and fat (200 g) was introduced into a stainless steel beaker, and, while being incubated at 100°C, was stirred and air (200 mL/min) was supplied thereto. Reaction was performed for 30 hours, and an oxidized oil and fat having a POV of 105 was obtained. Rapeseed oil (90 parts by mass) was mixed with 10 parts by mass of the resultant oxidized oil and fat to obtain preparation example 19.

An evaluation was performed using the same operations as those in example 1-3, except that rapeseed oil (control) or any of preparation examples 17 to 19 was added in lieu of preparation example 4. The results are shown in Table 4.

**[Table 4]**

| | Control | Example 4-1 | Example 4-2 | Example 4-3 |
|---|---|---|---|---|
| Added component | Rapeseed oil | Preparation example 17 | Preparation example 18 | Preparation example 19 |
| POV of oxidized oil and fat in added component (meq/kg) | - | 44.6 | 100 | 105 |
| Oxidized oil and fat content of added component (percent by mass) | 0 | 10 | 10 | 10 |
| Oxidized oil and fat content during consumption (ppm) | 0 | 100 | 100 | 100 |
| Milk fat content during consumption (ppm) | 0 | 70 | 50 | 20 |
| Suppression of lingering aftertaste due to sweetness | × | ○ | ○ | Δ |
| Quality of sweetness | × | ○ | ○ | Δ |

As shown in examples 4-1 to 4-3, an effect for suppressing lingering aftertaste due to sweetness was confirmed when the anhydrous milk fat content included in the oxidized oil and fat was 20% by mass or higher. The effect was stronger for an anhydrous milk fat content of 50% by mass or higher. The same effect was also achieved with regard to quality of sweetness.

### (Evaluation using various high-intensity sweeteners)

An evaluation was performed using the same operations as those in example 1-3, except that the Pal sweet calorie zero and the blended amounts thereof were replaced by the high-intensity sweeteners described in Table 5 and the blended amounts thereof. The results are shown in Table 5. Rapeseed oil as added in lieu of preparation example 4 and used as a control.

**[Table 5]**

| | Control | Example 5-1 | Control | Example 5-2 | Control | Example 5-3 |
|---|---|---|---|---|---|---|
| Type of high-intensity sweetener | Aspartame | | Sucralose | | Sucralose | |
| Blended amount of high-intensity sweetener (g) | 0.2 | 0.2 | 0.033 | 0.033 | 0.066 | 0.066 |
| Added component | Rapeseed oil | Preparation example 4 | Rapeseed oil | Preparation example 4 | Rapeseed oil | Preparation example 4 |
| POV of oxidized oil and fat in added component (meq/kg) | - | 46 | - | 46 | - | 46 |
| Oxidized oil and fat content of added component (percent by mass) | 0 | 10 | 0 | 10 | 0 | 10 |
| Oxidized oil and fat content during consumption (ppm) | 0 | 100 | 0 | 100 | 0 | 100 |
| Suppression of lingering aftertaste due to sweetness | × | ⊚ | × | ○ | × | ○ |
| Quality of sweetness | × | ⊚ | × | ⊚ | × | ○ |

As shown in Table 5, when either of aspartame or sucralose was used as the high-intensity sweetener, adding the taste improver according to the present invention made it possible to suppress a lingering aftertaste due to sweetness of the high-intensity sweetener and to bring the quality of sweetness close to that of sugar.

A milk gel was obtained using the same operation as in example 1-3, except that the Pal sweet calorie zero and the blended amounts thereof were replaced by the high-intensity sweeteners described in Table 6 and the blended amounts thereof. The resultant milk gel was eaten by three panelists, and the suppression of an aftertaste due to bitterness/off-flavor was evaluated according to the following evaluation criteria on the basis of consultation. The results are shown in Table 6. Rapeseed oil as added in lieu of preparation example 4 and used as a control.

### <Suppression of aftertaste due to bitterness/off-flavor>

⊚: Extremely weak aftertaste due to bitterness/off-flavor relative to control
○: Weak aftertaste due to bitterness/off-flavor relative to control
Δ: Somewhat weak aftertaste due to bitterness/off-flavor relative to control
×: Equal or stronger aftertaste due to bitterness/off-flavor relative to control

**[Table 6]**

| | Control | Example 6-1 | Control | Example 6-2 | Control | Example 6-3 |
|---|---|---|---|---|---|---|
| Type of high-intensity sweetener | Aspartame | | Sucralose | | Acesulfame K | |
| Blended amount of high-intensity sweetener (g) | 0.2 | 0.2 | 0.066 | 0.066 | 0.2 | 0.2 |
| Added component | Rapeseed oil | Preparation example 4 | Rapeseed oil | Preparation example 4 | Rapeseed oil | Preparation example 4 |
| POV of oxidized oil and fat in added component (meq/kg) | - | 46 | - | 46 | - | 46 |
| Oxidized oil and fat content of added component (percent by mass) | 0 | 10 | 0 | 10 | 0 | 10 |
| Oxidized oil and fat content during consumption (ppm) | 0 | 100 | 0 | 100 | 0 | 100 |
| Suppression of aftertaste due to bitterness/off-flavor | × | ○ | × | ○ | × | ⊚ |

As shown in Table 6, when any of aspartame, sucralose, or acesulfame K was used as the high-intensity sweetener, adding the taste improver according to the present invention made it possible to suppress an aftertaste due to bitterness/off-flavor. The effect was particularly notable in the case of acesulfame K.

### (Preparation example 20)

Ultra-hard palm kernel oil (45 parts by mass), 63.36 parts by mass of corn syrup (water content: 25% by mass), 2.10 parts by mass of a pH adjuster mix (dibasic potassium phosphate and trisodium citrate), and 5.38 parts by mass of an emulsifier mix (a mixture of acid casein, sodium hydroxide, a sorbitan fatty acid ester, and a glycerin fatty acid ester) were blended and mixed. Water (84.16 parts by mass) was furthermore added, emulsification/spraying was performed by the usual method, and a powdered oil and fat was obtained (preparation example 20).

### (Preparation example 21)

Ultra-hard palm kernel oil (44 parts by mass), 1 part by mass of preparation example 1, 63.36 parts by mass of corn syrup (water content: 25% by mass), 2.10 parts by mass of a pH adjuster mix (dibasic potassium phosphate and trisodium citrate), and 5.38 parts by mass of an emulsifier mix (a mixture of acid casein, sodium hydroxide, a sorbitan fatty acid ester, and a glycerin fatty acid ester) were blended and mixed. Water (84.16 parts by mass) was furthermore added, emulsification/spraying was performed by the usual method, and a powdered oil and fat was obtained (preparation example 21).

### (Evaluation in instant coffee)

Instant coffee was prepared using the blended amounts described in Table 7. The resultant instant coffee was drunk by three panelists, and the suppression of a lingering aftertaste due to sweetness and the quality of the sweetness were evaluated according to the following evaluation criteria on the basis of consultation. The results are shown in Table 7. The following products were used in this evaluation.

Instant coffee powder (product name: Blendy mellow & rich, manufactured by Ajinomoto General Foods, Inc.)
High-intensity sweetener having aspartame as main ingredient (product name: Pal sweet calorie zero, manufactured by Ajinomoto Co., Ltd.)
High-intensity sweetener having sucralose as main ingredient (product name: Sugar cut, manufactured by ASADAAME CO., LTD.)

### <Suppression of lingering aftertaste due to sweetness>

⊚: Extremely weak lingering aftertaste due to sweetness relative to control
○: Weak lingering aftertaste due to sweetness relative to control
Δ: Somewhat weak lingering aftertaste due to sweetness relative to control
×: Equal or stronger lingering aftertaste due to sweetness relative to control

### <Quality of sweetness>

⊚: Extremely close to sweetness of sugar
○: Close to sweetness of sugar
Δ: Somewhat different from sweetness of sugar
×: Different from sweetness of sugar

**[Table 7]**

| | Comparative example 7-1 (Control) | Example 7-1 | Example 7-2 | Comparative example 7-2 (control) | Example 7-3 | Example 7-4 |
|---|---|---|---|---|---|---|
| Instant coffee powder (g) | 0.6 | 0.6 | 0.6 | 0.6 | 0.6 | 0.6 |
| High-intensity sweetener having aspartame as main ingredient (g) | 0.9 | 0.9 | 0.9 | | | |
| High-intensity sweetener having sucralose as main ingredient (g) | | | | 0.9 | 0.9 | 0.9 |
| Preparation example 20 (g) | 3.3 | 3.2 | 3.0 | 3.3 | 3.2 | 3.0 |
| Preparation example 21 (g) | | 0.1 | 0.3 | | 0.1 | 0.3 |
| Hot water (g) | 96.0 | 96.0 | 96.0 | 96.0 | 96.0 | 96.0 |
| Oxidized oil and fat concentration during consumption (ppm) | 0 | 10 | 30 | 0 | 10 | 30 |
| Suppression of lingering aftertaste due to sweetness | × | ○ | ⊚ | × | ○ | ⊚ |
| Quality of sweetness | × | ○ | ⊚ | × | ○ | ⊚ |

Adding the taste improver according to the present invention, in the form of a pulverulent oil and fat, to the instant coffee made it possible to suppress a lingering aftertaste due to sweetness of the high-intensity sweetener and to bring the quality of sweetness close to that of sugar.

### (Preparation example 22)

Ultra-hard palm kernel oil (35 parts by mass), 10 parts by mass of preparation example 1, 63.36 parts by mass of corn syrup (water content: 25% by mass), 2.10 parts by mass of a pH adjuster mix (dibasic potassium phosphate and trisodium citrate), and 5.38 parts by mass of an emulsifier mix (a mixture of acid casein, sodium hydroxide, a sorbitan fatty acid ester, and a glycerin fatty acid ester) were blended and mixed. Water (84.16 parts by mass) was furthermore added, emulsification/spraying was performed by the usual method, and a powdered oil and fat was obtained (preparation example 22).

### (Evaluation in cola)

A commercially available cola (product name: Kirin Mets cola, manufactured by Kirin Beverage Company, Limited.; includes an aspartame/L-phenylalanine compound, acesulfame K, and sucralose as sweeteners) (200 g) was heated to approximately 60°C, after which 0.1 g of preparation example 20 (control) or preparation example 22 was added and the resultant mixture was sufficiently stirred using a spatula. After being cooled to 4°C, the cola was drunk by three panelists, and the suppression of a lingering aftertaste due to sweetness was evaluated according to the same evaluation criteria as those for example 7-1 on the basis of consultation. The results are shown in Table 8.

**[Table 8]**

| | Comparative example 8-1 (control) | Example 8-1 |
|---|---|---|
| Added component | Preparation example 20 | Preparation example 22 |
| Oxidized oil and fat content during consumption (ppm) | 0 | 50 |
| Suppression of lingering aftertaste due to sweetness | × | ⊚ |

Adding the taste improver according to the present invention, in the form of a pulverulent oil and fat, to the commercially available cola including the high-intensity sweetener makes it possible to suppress a lingering aftertaste due to sweetness of the high-intensity sweetener.

### (Evaluation in cookies)

### (Preparation example 23)

Margarine (product name: Rama, manufactured by J-OIL MILLS, Inc.) was kept at 30°C and softened. Preparation example 1 (10 parts by mass) was added to 90 parts by mass of the softened margarine and mixed well, and the mixture was cooled in a refrigerator to obtain preparation example 23.

Dough in the blend described in Table 9 was produced, and the resultant dough was rounded into small balls, spread evenly so as to have a thickness of approximately 5 mm, and baked for 15 minutes at 180°C. The resultant cookies were eaten by three panelists, and the suppression of a lingering aftertaste due to sweetness and the quality of the sweetness were evaluated according to the same evaluation criteria as those for example 7-1 on the basis of consultation. The results are shown in Table 9.

**[Table 9]**

| | Comparative example 9-1 (control) | Example 9-1 |
|---|---|---|
| Wheat flour (g) | 60 | 60 |
| Margarine (g)*¹ | 40 | 39.78 |
| High-intensity sweetener having aspartame as main ingredient (g) | 6.76 | 6.76 |
| Preparation example 23 (g) | | 0.22 |
| Oxidized oil and fat concentration during consumption (ppm) | 0 | 200 |
| Suppression of lingering aftertaste due to sweetness | × | ⊚ |
| Quality of sweetness | × | ⊚ |

| | | |
|---|---|---|
| *¹: Product name: Rama, manufactured by J-OIL MILLS, Inc. | | |

Blending the taste improver according to the present invention into the cookies made it possible to suppress a lingering aftertaste due to sweetness of the high-intensity sweetener included in the cookies and to bring the quality of the sweetness closer to that of sugar.

### (Evaluation in whipped cream)

Materials in the blend described in Table 10 were added to cream (product name: Sujahta whip, manufactured by Sujahta Meiraku Co., Ltd.), and the cream was beaten using a hand mixer for approximately 20 minutes (until peaks were substantially formed) while being cooled with ice water to obtain whipped cream. The resultant whipped cream was eaten by three panelists, and the suppression of a lingering aftertaste due to sweetness and the quality of the sweetness were evaluated according to the same evaluation criteria as those for example 7-1 on the basis of consultation. The results are shown in Table 10.

**[Table 10]**

| | Comparative example 10-1 (control) | Example 10-1 | Comparative example 10-2 (control) | Example 10-2 |
|---|---|---|---|---|
| Cream (g) | 100 | 100 | 100 | 100 |
| Granulated sugar (g) | 5 | 5 | 5 | 5 |
| High-intensity sweetener having aspartame as main ingredient (g1) | 1.7 | 1.7 | | |
| High-intensity sweetener having sucralose as main ingredient (g) | | | 1.7 | 1.7 |
| Rapeseed oil (g) | 0.1 | | 0.1 | |
| Preparation example 4 (g) | | 0.1 | | 0.1 |
| Oxidized oil and fat concentration during consumption (ppm) | 0 | 100 | 0 | 100 |
| Suppression of lingering aftertaste due to sweetness | × | ⊚ | × | Δ |
| Quality of sweetness | × | ⊚ | × | ○ |

Blending the taste improver according to the present invention into the whipped cream made it possible to suppress a lingering aftertaste due to sweetness of the high-intensity sweetener included in the whipped cream and to bring the quality of the sweetness closer to that of sugar. The effect was particularly notable when a high-intensity sweetener having aspartame as the main ingredient was used.

### (Evaluation in black tea)

A high-intensity sweetener, etc., such as is described in Table 11 was added to black tea obtained by steeping a tea bag (product name: Lipton yellow-label tea bag, manufacture by Unilever Japan K.K.) in hot water and extracting the tea, and high-intensity-sweetener-containing black tea was obtained. The resultant high-intensity-sweetener-containing black tea was drunk by three panelists, and the suppression of a lingering aftertaste due to sweetness was evaluated according to the same evaluation criteria as those for example 7-1 on the basis of consultation. The results are shown in Table 11.

**[Table 11]**

| | Comparative example 11-1 (control) | Example 11-1 | Comparative example 11-2 (control) | Example 11-2 |
|---|---|---|---|---|
| Black tea (g) | 96 | 96 | 96 | 96 |
| High-intensity sweetener having aspartame as main ingredient (g) | 1.7 | 1.7 | | |
| High-intensity sweetener having sucralose as main ingredient (g) | | | 1.7 | 1.7 |
| Preparation example 20 (g) | 3.3 | 3.2 | 3.3 | 3.2 |
| Preparation example 21 (g) | | 0.1 | | 0.1 |
| Oxidized oil and fat concentration during consumption (ppm) | 0 | 10 | 0 | 10 |
| Suppression of lingering aftertaste due to sweetness | × | ⊚ | × | ○ |

Blending the taste improver according to the present invention into the black tea made it possible to suppress a lingering aftertaste due to sweetness of the high-intensity sweetener added to the black tea. The effect was particularly notable when a high-intensity sweetener having aspartame as the main ingredient was used.

### (Evaluation in pudding)

The materials described in Table 12, other than the liquid egg, were added to 125 g of milk at approximately 50°C, mixed, and uniformly dispersed to obtain a mixed liquid. The mixed liquid was cooled in a refrigerator, after which 50 g of liquid egg was added and the mixed liquid was stirred, and then the mixed liquid was poured into a heat-resistant container. Hot water was poured into an oven-safe square dish, the heat-resistant container was placed in the square dish, and the contents were steamed for 30 minutes in an oven that had been preheated to 140°C. The contents were allowed to cool slightly and then were immediately cooled in a refrigerator to obtain a pudding. The resultant pudding was eaten by three panelists, and the suppression of a lingering aftertaste due to sweetness and the quality of the sweetness were evaluated according to the same evaluation criteria as those for example 7-1 on the basis of consultation. The results are shown in Table 12.

**[Table 12]**

| | Comparative example 12-1 (control) | Example 12-1 | Comparative example 12-2 (control) | Example 12-2 |
|---|---|---|---|---|
| Milk (g) | 125 | 125 | 125 | 125 |
| Liquid egg (g) | 50 | 50 | 50 | 50 |
| High-intensity sweetener having aspartame as main ingredient (g) | 13.5 | 13.5 | | |
| High-intensity sweetener having sucralose as main ingredient (g) | | | 13.5 | 13.5 |
| Preparation example 20 (g) | 0.19 | | 0.19 | |
| Preparation example 22 (g) | | 0.19 | | 0.19 |
| Oxidized oil and fat concentration during consumption (ppm) | 0 | 100 | 0 | 100 |
| Suppression of lingering aftertaste due to sweetness | × | ⊚ | × | ○ |
| Quality of sweetness | × | ⊚ | × | ○ |

Blending the taste improver according to the present invention into the pudding made it possible to suppress a lingering aftertaste due to sweetness of the high-intensity sweetener included in the pudding and to bring the quality of the sweetness closer to that of sugar. The effect was particularly notable when a high-intensity sweetener having aspartame as the main ingredient was used.

### Manufacturing example for taste improver

Anhydrous milk fat (200 g) was introduced into a stainless steel beaker, and, while being incubated at 100°C, was stirred and air (5 mL/min) was supplied thereto. When the peroxide value reached 47, the air supply was stopped and the system was cooled to obtain oxidized oil and fat. The resultant oxidized oil and fat was used as the taste improver.

### Manufacturing example 1 for sweetness-imparting composition

Preparation example 21 (30 parts by mass) was added to 100 parts by mass of a high-intensity sweetener having aspartame as the main ingredient and mixed well to manufacture the sweetness-imparting composition.

### Manufacturing example 2 for sweetness-imparting composition

Preparation example 21 (300 parts by mass) and 500 parts by mass of dextrin were added to 100 parts by mass of aspartame and mixed well to manufacture the sweetness-imparting composition.

### Manufacturing example 3 for sweetness-imparting composition

Preparation example 21 (100 parts by mass) was added to 100 parts by mass of sucralose and mixed well to manufacture the sweetness-imparting composition.

## Claims

1. A taste improver for a high-intensity sweetener, the taste improver having, as an active ingredient, an oxidized oil and fat having a peroxide value of 15 or more to 180 or less and including 10% by mass or more to 100% by mass or less of milk fat.

2. The taste improver of claim 1, wherein the taste improver includes 0.001% by mass or more to 100% by mass or less of the oxidized oil and fat.

3. The taste improver of claim 1 or 2, wherein the improvement in taste is an improvement of unusual flavors in a high-intensity sweetener.

4. A method for manufacturing a taste improver for a high-intensity sweetener, the method including
a step for heating, while supplying oxygen to, a raw material oil and fat including 10% by mass or more to 100% by mass or less of milk fat, and obtaining an oxidized oil and fat having a peroxide value of 15 or more to 180 or less.

5. The manufacturing method of claim 4, wherein the raw material oil and fat includes 20% by mass or more to 100% by mass or less of milk fat.

6. The manufacturing method of claim 4 or 5, wherein the heating is performed for 1 hour or more to 72 hours or less at a temperature of 65°C or higher to 150°C or lower.

7. The manufacturing method of any of claims 4 to 6, wherein the supply of oxygen is 0.001 L/min or more to 2 L/min or less per kilogram of the raw material oil and fat.

8. The manufacturing method of any of claims 4 to 7, wherein the milk fat is anhydrous milk fat.

9. The manufacturing method of any of claims 4 to 8, wherein the oil and fat content of the raw material oil and fat is 90% by mass or more to 100% by mass or less.

10. The manufacturing method of any of claims 4 to 9, wherein the method furthermore includes a step for adding the oxidized oil and fat to an edible oil and fat.

11. The manufacturing method of claim 10, wherein 0.001% by mass or more to 50% by mass or less of the oxidized oil and fat is added to the edible oil and fat.

12. A food or drink including a high-intensity sweetener, the food or drink including the taste improver of any of claims 1 to 3.

13. The food or drink of claim 12, wherein the taste improver is included so that the milk fat content of the oxidized oil and fat is 0.01 ppm or more to 10000 ppm or less.

14. The food or drink of claim 12 or 13, wherein the taste improver is included so that the milk fat content of the oxidized oil and fat is 0.0001 parts by mass or more to 10000 parts by mass or less in relation to 100 parts by mass of the high-intensity sweetener.

15. The food or drink of any of claims 12 to 14, wherein 0.00001% by mass or more to 5% by mass or less of the high-intensity sweetener is included.

16. A method for imparting sweetness, the method being **characterized in that** an oxidized oil and fat having a peroxide value of 15 or more to 180 or less and including 10% by mass or more to 100% by mass or less of milk fat, and a high-intensity sweetener, are added to a food or drink.

17. A sweetness-imparting composition **characterized by** including an oxidized oil and fat having a peroxide value of 15 or more to 180 or less and including 10% by mass or more to 100% by mass or less of milk fat, and a high-intensity sweetener.
